# EUROPÄISCHE PATENTSCHRIFT

(11) **EP 2 071 424 B1**
(45) Veröffentlichungstag und Bekanntmachung des Hinweises auf die Patenterteilung: **22.08.2012**
(21) Anmeldenummer: 08019887.2
(22) Anmeldetag: 14.11.2008
(51) Int. Cl.: G05D 7/06, G05D 24/02, G01G 13/24, A21C 1/14, B01F 15/04, B01J 4/02, G01G 13/26, G01G 17/06

(54) **Dosiereinheit**
Dosing unit
Unité de dosage

(30) Priorität: 21.11.2007 DE 102007055685
(43) Veröffentlichungstag der Anmeldung: 17.06.2009
(73) Patentinhaber: Brabender GmbH & Co. KG, 47055 Duisburg (DE)
(72) Erfinder: Dreisörner, Jens, 32312 Lübbecke (DE)
(74) Vertreter: Röther, Peter

(56) Entgegenhaltungen:
- EP-A1- 0 425 735
- DE-A1- 3 023 823
- US-A- 3 368 472

## Beschreibung

Die Erfindung betrifft eine Dosiereinheit zum gezielten Zumischen von Fluiden in eine in einem temperierbaren MischBehälter befindliche Basissubstanz.

Es ist aus der DE 30 23 823 A1 eine Dosiereinheit zum gezielten Dosieren von Fluiden in einen externen Behälter bestehend aus einem Gefäß für das zu dosierende Fluid bekannt, das mit einer verschließbaren Zuleitung und einer verschließbaren Rückleitung versehen ist, aus einer in den Kreislauf durch Zu- und Rückleitung einschaltbaren Temperiereinheit für das Fluid und aus einer Vorrichtung zur Bestimmung der aus dem verschließbaren Gefäß abzuleitenden Dosiermenge.

Die bekannte Vorrichtung ist allerdings kompliziert und damit störanfällig aufgebaut, was die Dosierung als auch die Temperierung anbetrifft.

Obwohl die Erfindung hierauf nicht beschränkt ist, wird sie im folgenden am Beispiel der Zumischung von Wasser zu einem Mehl beim Verfahren zur Bestimmung der Absorptionsfähigkeit und Knetbarkeit eines aus diesen Bestandteilen bestehenden Teiges erläutert.

Hierbei handelt es sich um ein standardisiertes Verfahren, bei dem eine abgemessene Menge Mehl in einem Mischbehälter vorliegt. In diesem Mischbehälter werden Rühr/Knetkörper in Tätigkeit gesetzt und nach einer gewissen Zeit wird nun das Wasser oder auch eine wässrige Lösung zugeführt, bis eine vorher gewünschte Zielviskosität erreicht ist oder erreicht wird.

Hierbei ist es von größter Wichtigkeit, dass die beteiligten Mischsubstanzen mengenmäßig genau bekannt sind und auch die Temperaturen der Substanzen aufeinander abgestimmt sind.

Dabei soll beim Zusammenführen der beteiligten Substanzen gleichzeitig die Menge des zu zudosierenden Wassers bzw. des Fluids abgemessen werden.

Die erfindungsgemäße Dosiereinheit ist dadurch gekennzeichnet, dass dass das Gefäß verschließbar ist und von der Zuleitung eine Leitung abgeht, die in eine in den externen Behälter mündende Füllleitung (23) übergeht, in der ein Magnetventil vorgesehen ist, wobei in die Zuleitung zum Gefäß ein Magnetventil eingeschaltet ist, durch das dosiertes Fluid in eine in den externen Behälter mündende Leitung ableitbar ist, und von der Rückleitung , in welcher ein Magnetventil vorgesehen ist, eine über ein Magnetventil abschließbare Leitung vertikal nach oben abgeht und die verschließbare Zuleitung von dem Vorratsgefäß und die verschließbare Rückleitung zu dem Vorratsgefäß führen.

Das Fluid (beispielsweise destilliertes Wasser) durchläuft zunächst die Temperiereinheit und gelangt über die Zuleitung in das mit der Vorrichtung zur Bestimmung der Dosiermenge verbundene Dosiergefäß. Dieser Dosiervorgang wird fortgesetzt, bis das Fluid über den Überlauf des Gefäßes in die Rückleitung gelangt und über diese erneut zur Temperiereinheit, von wo sie über die Zuleitung wieder in das Dosiergefäß geleitet wird. Dieser Vorgang wird fortgesetzt, bis die gewünschte Temperatur erreicht ist und vor allen Dingen das gesamte System die für das Einmischen gewünschte Temperatur aufweist. Die zu dosierende Flüssigkeit wird somit vor der eigentlichen Dosierung genau temperiert und definiert im Überschuss in das Dosiergefäß eingespült.

Als besonders einfache Vorrichtung zum Temperieren ist gemäß Anspruch 6 vorgesehen, dass die Temperiereinheit ein Wärmetauscher ist, dessen Primärkreis von dem Temperiermedium beaufschlagt ist, das den Mischbehälter und dessen Inhalt auf einer einstellbaren Temperatur hält.

Das zur Temperierung des Mischbehälters verwendete Medium kann allgemein nicht direkt zur Dosierung genutzt werden, da es in der Regel eine andere Zusammensetzung als das zu dosierende Fluid besitzt. Es sind in diesen Fällen daher getrennte Kreisläufe nötig. Ein Wärmetauscher ermöglicht die Erzeugung zweier getrennter Kreisläufe zweier Medien, so dass auf diese Weise das Fluid nach wenigen Zirkulationen in der dargestellten Vorrichtung exakt auf der notwendigen Mischtemperatur ist, insbesondere auf der Temperatur, die auch im Mischbehälter vorherrschen soll.

Nach Befüllen des Gefäßes mit temperierter Flüssigkeit und erfolgter Temperierung des Systems durch Spülen der Leitungen mit dem temperierten Fluid wird die Befüllung gestoppt. Durch anschließendes Dosieren aus dem Dosiergefäß wird dann das temperierte Fluid dem Mischbehälter zugeführt. Dabei kann ein Teil der bereits temperierten Füllleitung als Dosierleitung fungieren. Dies ist möglich durch die Schaltung des Ventils in der Zuleitung, durch das die Verbindung mit der Temperiereinheit unterbunden wird und nun aus dem Dosiergefäß über die Zuleitung und das einen Abzweig in die Füllleitung gelangt. Das zuerst in die Füllleitung gelangte temperierte Fluid wird verworfen, so dass zu einem exakt bestimmbaren Zeitpunkt mit der eigentlichen Dosierung begonnen werden kann.

Gemäß Anspruch 2 bzw. 3 ist das Dosiergefäß auf oder an der Vorrichtung zur Bestimmung der abzuleitenden Dosiermenge angeordnet.

Dabei kann diese Vorrichtung gemäß Anspruch 4 eine Wägezelle sein. Eine weitere Alternative wird gemäß Anspruch 5 darin gesehen, dass ein Drucksensor verwendet wird.

Beim letzteren wird beim Dosiervorgang der sich verringernde Druck im Dosiergefäß bzw. im Leitungssystem gemessen und auf die abgezogene Menge umgerechnet.

Der notwendige Druck während der Anspül- und Füllphase zur Aufrechterhaltung des Kreislaufs zwischen Temperiereinheit und Dosiergefäß wird durch eine Pumpe oder durch Gasdruck innerhalb der Temperiereinheit gewährleistet.

Die Ermittlung der Menge des zudosierten Fluids erfolgt unter Berücksichtigung definierter Masse-Zeit-Kalibrationen. Die Menge in Milliliter ergibt sich beispielsweise durch Messung der Masse des befüllten Gefäßes mit Abgleich zum Zielwert bei rechnergesteuerter interner Verwendung der jeweiligen Dichte des Fluids, wobei die Dosierung während und nach der Dosierung zum Zielwert mittels Differenzwägung rechnergestützt geprüft wird.

Die gesamte Vorrichtung ist als Modul aufgebaut, so dass sie bei Bedarf schnell installiert und angeschlossen werden kann. Gesteuert und geregelt wird der gesamte Vorgang über einen Computer, über den die Pumpleistung, Schaltung der Magnetventile etc. gesteuert wird.

Der besondere Vorteil der erfindungsgemäßen Vorrichtung ist in der simplen und günstigen Bauweise zu sehen, bei der als Gefäß für das zu dosierende Fluid eine handelsübliche und verschraubbare Kunststoffflasche (beispielsweise Erlenmeyer-Kolben) anstelle eines aufwendig zu fertigenden und zu beschichtenden Stahlblechkastens verwendet wird. Ein derart kostengünstiges Gefäß hat darüber hinaus den Vorteil der einfachen Zerlegbarkeit, Reinigung und Reparatur.

Durch die geschlossene Bauform der gesamten Dosiervorrichtung wird Wasserdampfbildung und damit Korrosion von Bauteilen oder elektrischen Kontakten im Gerät minimiert.

Durch die geschickte oben beschriebene Temperiermöglichkeit kann auf zusätzliche elektrische Temperierhilfen, wie Heizmatten mit notwendiger Temperatursensorik und Regelelektronik verzichtet werden.

Auch kann durch die dargelegte Bauart auf teuere Füllstandsensoren mit Steuerelektronik verzichtet werden.

Dadurch, dass für den Wärmetauscher im Vorlaufkreis das Temperiermedium benutzt wird, welches auch den Mischbehälter temperiert, können gleiche Temperaturen im Mischer und im Dosiermedium erreicht werden. Der Anwender kann z.B. bei 35°C Raumtemperatur seine für den individuellen Knetversuch gewünschte Temperatur von 20°C des Dosierfluids durch einfache Reihenschaltung der sekundären Temperiereinheit mit dem ohnehin auf 20°C temperierten primären Temperierkreislauf des Mischbehälters, der doppelwandig ausgeführt ist, erreichen. Hierdurch wird dem Anwender eine individuelle und kostengünstige Temperierung des Fluids ermöglicht.

Um das dosierte Fluid zum Mischbehälter zu transportieren, sind gemäß den Ansprüchen 8, 9 und 10 verschiedene Alternativen vorgeschlagen.

So kann eine Saugpumpe eingesetzt werden. Als zweite Alternative wird vorgeschlagen, das Leitungssystem mit Druck zu beaufschlagen.

Als dritte Alternative wird vorgeschlagen, den statischen Druck im Dosiergefäß selbst zu nutzen.

Alle drei Bespiele werden detaillierter in der Figurenbeschreibung weiter unten erläutert.

Es zeigen:
- Fig. 1: Dosiervorrichtung in einer ersten Alternative mit Wägezelle und Saugpumpe
- Fig. 2: Dosiereinheit in einer zweiten Alternative mit Wägezelle und Druckgassystem
- Fig. 3: Dosiereinheit in einer dritten Alternative mit Wägezelle ohne Saugpumpe
- Fig. 4: Dosiereinheit in einer vierten Alternative mit Drucksensor

In den Figuren ist eine Vorrichtung zum Dosieren, im folgenden kurz Dosiereinheit, dargestellt und allgemein mit dem Bezugszeichen 1 versehen. Sie ist auf einer Basishalterung 2 aufgebaut. Auf einem Teil 3 dieser Basishalterung 2 ist ein Wägesystem, in diesem Fall eine Wägezelle 4 montiert.

Bei dem Wägesystem kann es sich alternativ um ein rein mechanisches Wägesystem oder ein mechanisch/elektrisch regelndes oder handelndes System handeln. Auf dem Wägesystem (Wägezelle 4) ist eine Halterung 5 für ein geschlossenes Dosiergefäß 6 vorgesehen. Neben dem Teil 3 ist auf der Halterung 2 eine weitere Haltevorrichtung 7 vorgesehen, in die eine in das Dosiergefäß 6 mündende Zuleitung 8 und eine auch als Überlauf 10 aus dem Dosiergefäß 6 herausgeführte Rückleitung 9 eingespannt sind.

Beide Leitungen 8 und 9 enden in einem Vorratsgefäß 16, in dem ein Vorrat an Dosierfluid 15 vorhanden ist. Die Zuleitung 8 und die Rückleitung 9 durchlaufen einen Wärmetauscher 12, in dem eine Pumpe 12 integriert ist. Nicht dargestellt ist hier der Vorlaufkreis des Wärmetauschers 12. Dieser wird beaufschlagt von einer Temperierflüssigkeit, die einen Behälter 24 temperiert, in dem im vorliegenden Beispiel Rührund Knetkörper angeordnet sind, die eine Masse (beispielsweise Mehl) mit der zu dosierenden Flüssigkeit vermischen sollen.

Von der Zuleitung 8 zweigt eine Leitung 20 ab, die über eine zweite Pumpe 21 in die eigentliche Füllleitung 23 übergeht.

Zwischen dem Abzweig der Leitung 20 und dem Wärmetauscher 12 ist ein Magnetventil 13 in die Zuleitung 8 eingeschaltet. In der Rückleitung 9 ist ebenfalls ein Magnetventil 14 vorgesehen, ebenso wie ein Magnetventil 22 in der Füllleitung 23.

Von der Rückleitung 9 geht eine über ein Magnetventil 17 abschließbare Leitung 18 vertikal nach oben.

Das sich in dem Vorratsgefäß 16 befindliche Fluid 15 wird nach Öffnung der Ventile 13 und 14 über die Pumpen- und Wärmetauschereinheit 12 durch die Leitung 8 in das Gefäß 6 gefördert. Das Gefäß 6 wird so lange gefüllt bis über den Überlauf 10 und die Rückleitung 9 ein Rückfließen des Mediums zur Pumpen- und Wärmetauschereinheit 12 erfolgt. Hierdurch ist ein Fluidkreislauf geschaffen, der das Fluid 15 entsprechend der Temperaturvorgabe T in der Rückleitung 9 temperieren kann.

Nach Erreichen der Solltemperatur T werden die Ventile 13 und 14 geschlossen und die Pumpe in der Wärmetauschereinheit 12 abgeschaltet. Die Ventile 17 und 22 werden geöffnet und mittels der Pumpe 21 wird temperiertes Fluid 15 durch die Leitungen 8 und 20 sowie die Füllleitung 23 gespült. Das für die Temperierung dieser Leitungen verwendete Spülwasser wird verworfen, d. h. nicht in den Behälter 24 geleitet. Gasförmiges Medium (beispielsweise Luft) kann bei 19 zwecks Druckausgleich des ansonsten geschlossenen Kreislaufs durch die Leitung 18, das Ventil 17, die Rückleitung 9 und den Überlauf 10 in den Behälter 6 nachströmen.

Für die Dosierung wird die Pumpe 21 nun gestoppt, die Ventile 17 und 22 geschlossen, die Gewichtsistwerte der Halterung 5, des Behälters 6, des Überlaufs 10, der Mündung 11, der Zuleitung 8 sowie die links neben der Haltervorrichtung 7 befindlichen Teile der Leitungen 8 und 9 mit der Wägezelle 4 erfasst.

Die Füllleitung 23 wird zur Dosierung in den Behälter 24 positioniert, die Pumpe 21 gestartet sowie die Ventile 17 und 22 geöffnet.

Durch Vergleich des Istwerts mit einem Sollwert mittels der Wägezelle 4 werden bei Erreichen der Sollvorgaben die Ventile 22 und 17 geschlossen sowie die Pumpe 21 gestoppt.

Danach ist der Dosiervorgang beendet.

Obwohl in der Figur dargestellt ist, dass der Dosierbehälter 6 auf der Wägezelle 4 aufsitzt, kann auch vorgesehen sein, dass der Behälter an der Wägezelle 4 hängend montiert ist.

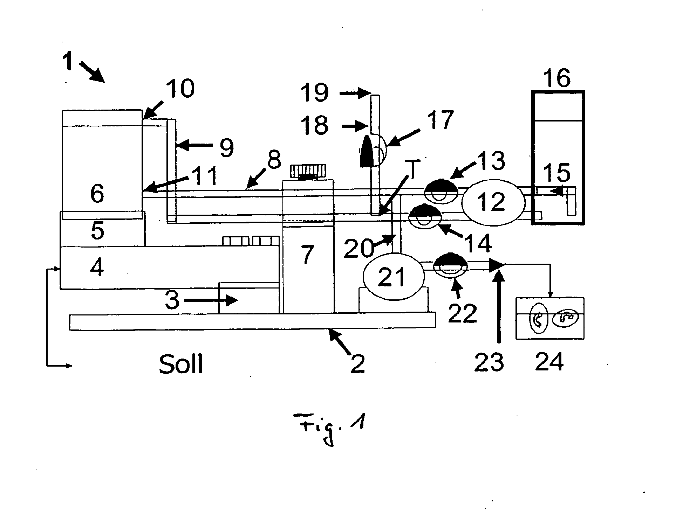

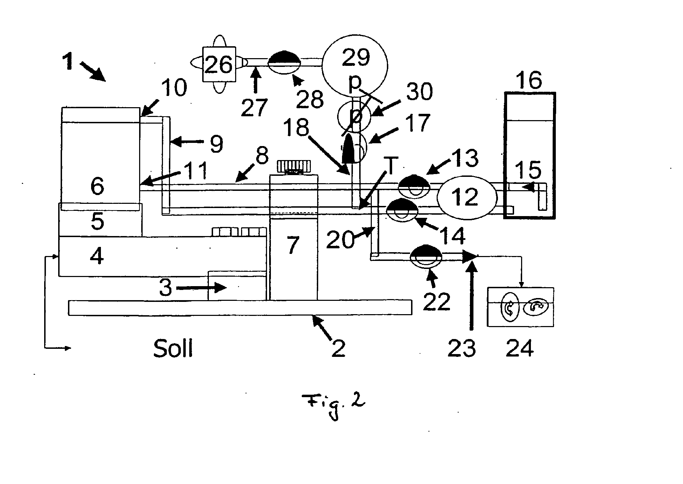

In der Figur 2 sind gleiche Bauteile mit den gleichen Bezugszeichen wie in Figur 1 bezeichnet.

Der Aufbau ist im Prinzip mit dem in Figur 1 identisch, mit der Ausnahme, dass auf die Pumpe 21 verzichtet worden ist. Stattdessen ist an das Ende der Leitung 18 ein Gasdruckerzeuger 26 angeschlossen, der über eine Leitung 27, in der ein Ventil 28 vorgesehen ist, mit einem Gasbehälter 29 verbunden ist. Zwischen Gasbehälter 29 und dem Ventil 17 in der Leitung 18 ist ein Reduzierventil zur Einstellung des Drucks vorgesehen.

Der Zirkulations- und Temperiervorgang ist wie in Figur 1. Jedoch nach Erreichen der Solltemperatur T des Fluids 15 im Kreislauf wird nun über das Reduzierventil 30 über die Leitung 9 und 10 im Behälter 6 ein Druck erzeugt, der die dosierte Menge an Fluid 15 über die Leitung 8, die Leitung 20 und 23 in den Behälter 24 befördert.

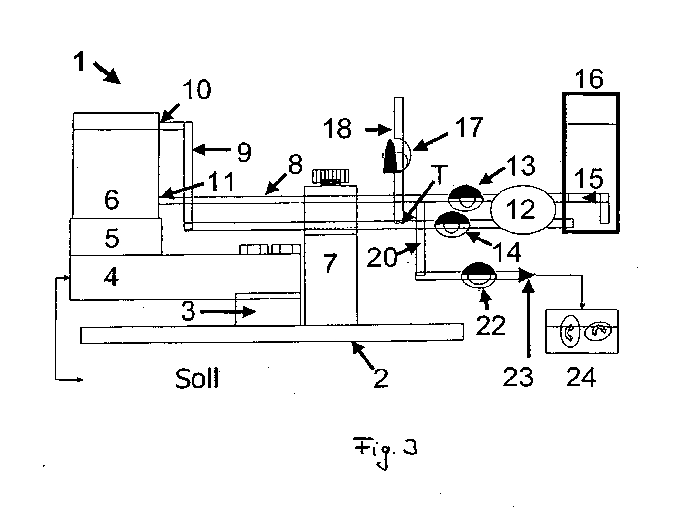

In der Figur 3 ist eine weitere Alternative der Erfindung dargestellt. Auch hier sind gleiche Bauteile mit den gleichen Bezugszeichen wie in Figur 1 und in Figur 2 bezeichnet.

Auch hier fehlt die Pumpe 21.

Nach Erreichen der Solltemperatur T des Fluids 15 im Kreislauf werden die Ventile 13 und 14 verschlossen und die Pumpe im Wärmetauscher 12 abgeschaltet. Die Ventile 17 und 22 werden geöffnet und mittels statischen Drucks von Fluid 15 im Behälter 6 wird das Fluid 15 aus dem Behälter 6 durch die Leitungen 8, 20, 22 und 23 gespült.

Der weitere Dosiervorgang erfolgt wie bezüglich Figur 1 und 2 beschrieben.

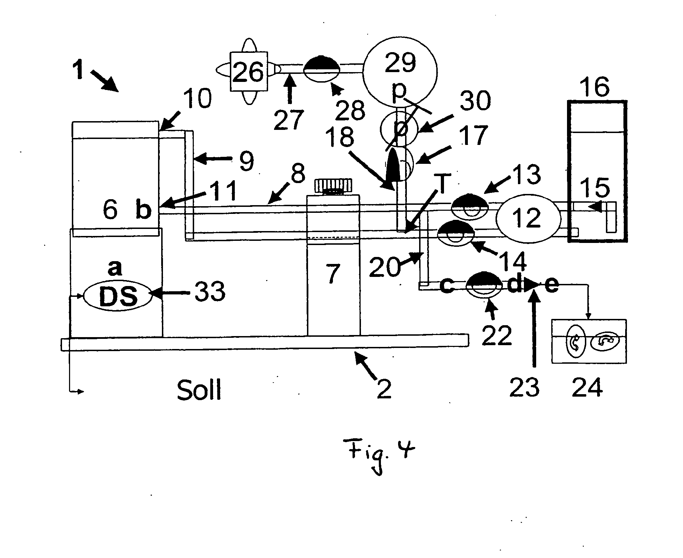

In der Figur 4 ist eine erfindungsgemäße Vorrichtung dargestellt, bei der am Beispiel mit dem Gasdruckerzeuger 26 (siehe Figur 2) dargestellt ist, dass statt der Wägezelle 4 ein Drucksensor 33 für die Dosierung vorgesehen ist.

Durch den zeitlichen Druckverlust von pᵢₛₜ, gemessen mittels des internen Drucksensors 33, kann aufgrund einer Auslaufmenge-Zeit-Druck-Kalibration die Auslaufmenge bestimmt und vorhergesagt werden. Im direkten Vergleich IST (berechnet) mit Soll wird bei Erreichen der Sollvorgaben das Ventil 22 und das Ventil 17 geschlossen.

Die Position des Drucksensors 33 ist variabel und kann innerhalb des Dosiersystems an den Stellen, die mit a, b, c, d oder e bezeichnet sind, zum Einsatz kommen.

Diese vierte Variante kann auch mit der Pumpe 21 oder aufgrund des Saugdrucks (Fig. 3) betrieben werden.

## Patentansprüche

1. Dosiereinheit (1) zum gezielten Dosieren von Fluiden (15) in einen externen Behälter(24) bestehend aus einem Gefäß (6) für das zu dosierende Fluid (15), das mit einer verschließbaren Zuleitung (8) und einer verschließbaren Rückleitung (9) versehen ist, aus einer in den Kreislauf durch Zu- und Rückleitung(8, 9) einschaltbaren Temperiereinheit (12) für das Fluid (15) und aus einer Vorrichtung (4, 33) zur Bestimmung der aus dem Gefäß (6) abzuleitenden Dosiermenge,
**dadurch gekennzeichnet,**
**dass** das Gefäß (6) verschließbar ist und von der Zuleitung (8) eine Leitung (20) abgeht, die in eine in den externen Behälter (24) mündende Füllleitung (23) übergeht, in der ein Magnetventil (22) vorgesehen ist, wobei in die Zuleitung (8) zum Gefäß (6) ein Magnetventil (13) eingeschaltet ist, durch das dosiertes Fluid in eine in den externen Behälter (24) mündende Leitung (20, 23) ableitbar ist, und von der Rückleitung (9), in welcher ein Magnetventil (14) vorgesehen ist, eine über ein Magnetventil (17) abschließbare Leitung (18) vertikal nach oben abgeht und die verschließbare Zuleitung (8) von dem Vorratsgefäß (16) und die verschließbare Rückleitung (9) zu dem Vorratsgefäß (16) führen.

2. Dosiereinheit nach Anspruch 1,
**dadurch gekennzeichnet,**
**dass** das Gefäß (6) auf der Vorrichtung (4, 33) zur Bestimmung der abzuleitenden Dosiermenge angeordnet ist.

3. Dosiereinheit nach Anspruch 1,
**dadurch gekennzeichnet,**
**dass** das Gefäß (6) an der Vorrichtung (4, 33) zur Bestimmung der abzuleitenden Dosiermenge angehängt ist.

4. Dosiereinheit nach einem der Ansprüche 1 bis 3,
**dadurch gekennzeichnet,**
**dass** die Vorrichtung zur Bestimmung der Dosiermenge eine Wägezelle (4) ist.

5. Dosiereinheit nach einem der Ansprüche 1 bis 3,
**dadurch gekennzeichnet,**
**dass** die Vorrichtung zur Bestimmung der Dosiermenge ein Drucksensor (33) ist.

6. Dosiereinheit nach einem der Ansprüche 1 bis 5,
**dadurch gekennzeichnet,**
**dass** die Temperiereinheit (12) ein Wärmetauscher ist, dessen Primärkreis von dem Temperiermedium beaufschlagt ist, das den Behälter (24) und dessen Inhalt auf einer einstellbaren Temperatur hält.

7. Dosiereinheit nach einem der Ansprüche 1 bis 6,
**dadurch gekennzeichnet,**
**dass** der Kreislauf zwischen Temperiereinheit (12) und Gefäß (6) mittels eine Pumpe aufrechterhalten wird.

8. Dosiereinheit nach einem der Ansprüche 1 bis 7,
**dadurch gekennzeichnet,**
**dass** die dosierte Fluidmenge (15) mittels einer Pumpe (21) zum, externen Behälter (24) abgesaugt wird.

9. Dosiereinheit nach einem der Ansprüche 1 bis 7,
**dadurch gekennzeichnet,**
**dass** die dosierte Fluidmenge (15) mittels eines Druckerzeugers (26) in den externen Behälter (24) gedrückt wird.

10. Dosiereinheit nach einem der Ansprüche 1 bis 7,
**dadurch gekennzeichnet,**
**dass** die dosierte Fluidmenge (15) durch den statischen Druck im Gefäß (6) in den externen Behälter (24) geleitet wird.

11. Dosiereinheit nach einem der Ansprüche 1 bis 10,
**dadurch gekennzeichnet,**
**dass** das verschließbare Gefäß (6) über eine Entlüftungseinrichtung (10, 18, 17) zum Druckausgleich im Gefäß (6) verfügt.

12. Dosiereinheit nach einem der Ansprüche 1 bis 11,
**dadurch gekennzeichnet,**
**dass** ein Computer zur Steuerung und Regelung des Dosiervorgangs vorgesehen ist.

13. Dosiereinheit nach einem der Ansprüche 1 bis 12,
**dadurch gekennzeichnet,**
**dass** das verschließbare Gefäß (6) ein Erlenmeyer-Kolben aus Kunststoff ist, der durch einen Schraubdeckel verschließbar ist.

14. Verfahren zum gezielten Dosieren von Fluiden in einen externen Behälter (24) mit Hilfe einer Vorrichtung nach einem der Ansprüche 1 bis 13, mit einem Gefäß (6) für das zu dosierende Fluid (15), das mit einer verschließbaren Zuleitung (8) und einer verschließbaren Rückleitung (9) versehen ist, aus einer in den Kreislauf durch Zu- und Rückleitung (8, 9) einschaltbaren Temperiereinheit (12) für das Fluid (15) und aus einer Vorrichtung (4, 33) zur Bestimmung der aus dem Gefäß (6) abzuleitenden Dosiermenge, **dadurch gekennzeichnet, dass** das zu dosierende Fluid (15) zunächst die Temperiereinheit (12) durchläuft und über eine Zuleitung (8) in das mit der Vorrichtung (4, 33) zur Bestimmung der Dosiermenge verbundene Dosiergefäß (6) gelangt, wobei dieser Vorgang so lange fortgesetzt wird, bis das Fluid (15) über den Überlauf (10) des Gefäßes (6) in die Rückleitung (9) gelangt und über diese erneut zur Temperiereinheit (12), von wo sie über die Zuleitung (8) wieder in das Dosiergefäß (6) geleitet wird, wobei der Kreislauf so lange aufrechterhalten wird, bis die gewünschte Temperatur (T) im Fluid (15) erreicht ist, wonach die Befüllung des Gefäßes (6) gestoppt wird und die Leitungen (8, 9) vom bzw. zum Temperiergerät (12) geschlossen werden, wobei über eine Abzweigleitung (20) an der Zuleitung (8) zum Gefäß (6) aus dem Gefäß (6) die dosierte Menge in den externen Behälter (24) geleitet wird.

15. Verfahren nach Anspruch 15,
**dadurch gekennzeichnet,**
**dass** das temperierte Fluid zunächst die Leitung (22, 23) zum externen Behälter (24) durchspült und vor der eigentlichen Eindosierung diese Spülmenge an Fluid verworfen wird.

16. Verfahren nach Anspruch 15 oder 16,
**dadurch gekennzeichnet,**
**dass** die Menge des zu dosierenden Fluids unter Berücksichtigung definierter Masse-Zeitkalibrationen erfolgt.

17. Verfahren nach Anspruch 17,
**dadurch gekennzeichnet,**
**dass** die jeweilige Dichte des Fluids bei der Berechnung berücksichtigt wird.

## Claims

1. Metering unit (1) for targeted metering of fluids (15) into an external vessel (24) consisting of a vessel (6) for the fluid being metered (15), which is provided with a closable feed line (8) and a closable return line (9), a temperature control unit (12) for the fluid (15) connectable into the circulation through the feed and return line (8, 9) and a device (4, 33) to determine the metered amount to be withdrawn from vessel (6), **characterized by** the fact that the vessel (6) is closable and a line (20) emerges from a feed line (8), which grades into a filling line (23) that discharges into the external container (24), in which a magnetic valve (22) is provided, a magnetic valve (13) being connected into the feed line (8) to vessel (6) through which metered fluid is diverted into a line (20, 23) that discharges into the external container (24) and from the return line (9) in which a magnetic valve (14) is provided, a line (18) closable via a magnetic valve (17) emerges vertically upward and the closable feed line (8) leads from the supply vessel (16) and the closable return line (9) to the supply vessel (16).

2. Metering unit according to Claim 1, **characterized by** the fact that the vessel (6) is arranged on the device (4, 33) to determine the metered amount to be withdrawn.

3. Metering unit according to Claim 1, **characterized by** the fact that the vessel (6) is suspended on the device (4, 33) to determine the metered amount to be discharged.

4. Metering unit according to one of the Claims 1 to 3, **characterized by** the fact that the device for determination of the metered amount is a weighing cell (4).

5. Metering unit according to one of the Claims 1 to 3, **characterized by** the fact that the device for determination of the metered amount is a pressure sensor (33).

6. Metering unit according to one of the Claims 1 to 5, **characterized by** the fact that the temperature control unit (12) is a heat exchanger, whose primary circuit is acted upon by the temperature-controlled medium, which keeps the container (24) and its contents at an adjustable temperature.

7. Metering unit according to one of the Claims 1 to 6, **characterized by** the fact that circulation to the temperature control unit (12) and vessel (6) is maintained by means ofa pump.

8. Metering unit according to one of the Claims 1 to 7, **characterized by** the fact that the metered amount of fluid (15) is withdrawn via pump (21) to external container (24).

9. Metering unit according to one of the Claims 1 to 7, **characterized by** the fact that the metered amount of fluid (15) is forced into the external container (24) by means of a pressure generator (26).

10. Metering unit according to one of the Claims 1 to 7, **characterized by** the fact that the metered amount of fluid (15) is fed into the external container (24) through the static pressure in vessel (6).

11. Metering unit according to one of the Claims 1 to 10, **characterized by** the fact that the closable vessel (6) has a venting device (10, 18, 17) for pressure equalization in vessel (6).

12. Metering unit according to one of the Claims 1 to 11, **characterized by** the fact that a computer is provided to control and regulate the metering process.

13. Metering unit according to one of the Claims 1 to 12, **characterized by** the fact that the closable vessel (6) is a plastic Erlenmeyer flask closable by a screw cap.

14. Method for targeted metering of fluids into an external container (24) by means of a device according to one of the Claims 1 to 13 with a vessel (6) for the fluid (15) being metered, which is provided with a closable feedline (8) and a closable return line (9), a temperature control unit (12) for fluid (15) connectable into the circulation through the feed return line (8, 9) and a device (4, 33) for determination of the metered amount to be discharged from vessel (6), **characterized by** the fact that the fluid (15) being metered initially passes through the temperature control unit (12) and enters via feed line (8) the metering vessel (6) connected to the device (4, 33) for determination of the metered amount, this process being continued until the fluid (15) reaches the return line (9) via the overflow (10) of vessel (6) and is fed via this line back to temperature control unit (12), from which it is fed back into metering vessel (6) via feed line (8), in which circulation is maintained until the desired temperature (T) in fluid (15) is reached, whereupon filling of vessel (6) is stopped and the lines (8, 9) from and to the temperature control device (12) are closed, in which case the metered amount is fed to the external container (24) via a bypass line (20) on the feed line (8) from vessel (6).

15. Method according to Claim 14, **characterized by** the fact that the temperature control fluid initially flushes line (22, 23) to external container (24) and this flushed amount of fluid is discarded before actual metering.

16. Method according to Claim 14 or 15, **characterized by** the fact that the amount of fluid to be metered occurs with consideration of defined mass-time calibration.

17. Method according to Claim 16, **characterized by** the fact that the corresponding density of the fluid is considered during calculation.

## Revendications

1. Unité de dosage (1) pour doser sélectivement des fluides (15) dans un conteneur externe (24), constituée d'un réservoir (6) pour le fluide à doser (15), lequel réservoir est muni d'une conduite d'alimentation obturable (8) et d'une conduite de retour obturable (9), d'une unité de maintien en température (12) du fluide (15) pouvant être intercalée dans le circuit par les conduites d'alimentation et de retour (8, 9), et d'un dispositif (4, 33) pour déterminer la quantité dosée à évacuer du réservoir (6),
**caractérisée en ce que**
le réservoir (6) peut être fermé et une conduite (20) part de la conduite d'alimentation (8), laquelle conduite (20) se prolonge dans une conduite de remplissage (23) débouchant dans le conteneur externe (24), dans laquelle est prévue une électrovanne (22), une électrovanne (13) étant raccordée au réservoir (6) dans la conduite d'alimentation (8), électrovanne (13) au moyen de laquelle le fluide dosé peut être dévié dans une conduite (20, 23) débouchant dans le conteneur externe (24) , et une conduite (18) pouvant être obturée par une électrovanne (17) sort verticalement vers le haut de la conduite de retour (9), dans laquelle est prévue une électrovanne (14), et la conduite d'alimentation obturable (8) part du réservoir de stockage (16) et la conduite de retour obturable (9) mène au conteneur de stockage (16).

2. Unité de dosage selon la revendication 1, **caractérisée en ce que** le réservoir (6) est agencé sur le dispositif (4, 33) de détermination de la quantité dosée à dévier.

3. Unité de dosage selon la revendication 1, **caractérisée en ce que** le réservoir (6) est accroché au dispositif (4, 33) de détermination de la quantité dosée à dévier.

4. Unité de dosage selon l'une quelconque des revendications 1 à 3, **caractérisée en ce que** le dispositif de détermination de la quantité dosée est une cellule de pesage (4).

5. Unité de dosage selon l'une quelconque des revendications 1 à 3, **caractérisée en ce que** le dispositif de détermination de la quantité dosée est un capteur de pression (33).

6. Unité de dosage selon l'une quelconque des revendications 1 à 5, **caractérisée en ce que** l'unité de maintien en température (12) est un échangeur de chaleur dont le circuit primaire est soumis au fluide de maintien en température, lequel circuit primaire inclut le conteneur (24) et maintient le contenu du conteneur (24) à une température réglable.

7. Unité de dosage selon l'une quelconque des revendications 1 à 6, **caractérisée en ce que** le circuit entre l'unité de maintien en température (12) et le réservoir (6) est entretenu au moyen d'une pompe.

8. Unité de dosage selon l'une quelconque des revendications 1 à 7, **caractérisée en ce que** la quantité de fluide dosée (15) est aspirée jusqu'au conteneur externe (24) au moyen d'une pompe (21).

9. Unité de dosage selon l'une quelconque des revendications 1 à 7, **caractérisée en ce que** la quantité de fluide dosée (15) est mise sous pression dans le conteneur externe (24) au moyen d'un générateur de pression (26).

10. Unité de dosage selon l'une quelconque des revendications 1 à 7, **caractérisée en ce que** la quantité de fluide dosée (15) est transférée dans le conteneur externe (24) par la pression statique dans le réservoir (6).

11. Unité de dosage selon l'une quelconque des revendications 1 à 10, **caractérisée en ce que** le récipient obturable (6) dispose de moyens de ventilation (10, 18, 17) pour équilibrer la pression dans le réservoir (6).

12. Unité de dosage selon l'une quelconque des revendications 1 à 11, **caractérisée en ce qu'**un ordinateur est prévu pour commander et réguler le processus de dosage.

13. Unité de dosage selon l'une quelconque des revendications 1 à 12, **caractérisée en ce que** le récipient obturable (6) est une fiole Erlenmeyer en matière plastique qui peut être fermée par un couvercle à vis (10).

14. Procédé pour doser sélectivement des fluides dans un conteneur externe (24) à l'aide d'un dispositif selon l'une quelconque des revendications 1 à 13, comportant un réservoir (6) pour le fluide à doser (15),
lequel réservoir (6) est muni d'une conduite d'alimentation obturable (8) et d'une conduite de retour obturable (9), d'une unité de maintien en température (12) du fluide (15) pouvant être intercalée dans le circuit par les conduites d'alimentation et de retour (8, 9), et d'un dispositif (4, 33) pour déterminer la quantité dosée à évacuer du réservoir (6), **caractérisé en ce que** le fluide à doser (15) traverse d'abord l'unité de maintien en température (12) et parvient, via une conduite d'alimentation (8) dans le réservoir de dosage (6) relié au dispositif (4, 33) de détermination de la quantité dosée, dans lequel ce processus est poursuivi jusqu'à ce que le fluide (15) parvienne dans la conduite de retour (9) par le trop-plein (10) du réservoir (6) et de nouveau via celle-ci dans l'unité de maintien en température (12) où il est de nouveau transféré dans le réservoir de dosage (6) via la conduite d'alimentation (8), le circuit étant entretenu jusqu'à ce que la température souhaitée (T) dans le fluide (15) soit atteinte, après quoi le remplissage du réservoir (6) est arrêté et les conduites (8, 9) sont obturées depuis ou jusqu'à l'unité de maintien en température (12), la quantité dosée étant transférée dans le réservoir externe (24) via une conduite de déviation (20) de la conduite d'alimentation (8) au réservoir (6).

15. Procédé selon la revendication 14, **caractérisé en ce que** le fluide maintenu en température rince d'abord la conduite (22, 23) jusqu'au réservoir externe (24) et cette quantité de rinçage est rejetée sur le fluide avant le dosage effectif.

16. Procédé selon la revendication 14 ou 15, **caractérisé en ce que** la quantité du fluide à doser est déterminée en tenant compte de calibrages masse-temps définis.

17. Procédé selon la revendication 16, **caractérisé en ce que** la densité respective du fluide est prise en compte dans les calculs.
